# DEMANDE DE BREVET EUROPEEN

(11) **EP 3 932 194 A1**
(43) Date de publication de la demande: **05.01.2022**
(21) Numéro de dépôt: 21182812.4
(22) Date de dépôt: 30.06.2021
(51) Int. Cl.: A01K 13/00

(54) **ACCESSOIRE POUR UN ÉLEVAGE D'ANIMAUX, DESTINÉ À ÊTRE FIXÉ SUR UNE STRUCTURE À RECOUVRIR ET À PROTÉGER**

(30) Priorité: 02.07.2020 FR 2006982
(71) Demandeur: Group Elastoteck, 44390 Nort sur Erdre (FR)
(72) Inventeur: BIORET, Jean-Vincent, 44390 Petit Mars (FR)
(74) Mandataire: Jacobacci Coralis Harle

(57) **Abrégé**

La présente invention concerne un accessoire (1) pour un élevage d'animaux, en particulier de bovins, équins ou porcins, destiné à être fixé sur une structure à recouvrir et à protéger.

Cet accessoire (1) comprend une plaque (5) réalisée dans un matériau élastique.

La plaque (5) comporte une face avant (55) et une face arrière (56), entre lesquelles est rapportée au moins une sous-couche de renfort (2).

La plaque (5) comporte :
- plusieurs organes saillants (6), adaptés au brossage des animaux, répartis sur ladite face avant (55), et
- plusieurs logements (8), répartis sur la surface de ladite au moins une sous-couche de renfort (2), adaptés chacun à recevoir un organe de fixation (9).

## Description

### Domaine technique de l'invention

La présente invention concerne le domaine technique de l'élevage des animaux, notamment les bovins, équins ou porcins.

Elle concerne en particulier les accessoires pour les élevages d'animaux, destinés à être fixés sur une structure à recouvrir et à protéger.

### Etat de la technique

Les élevages nécessitent un environnement conçu de façon à permettre aux animaux de demeurer et d'évoluer sans se blesser.

En particulier, certaines structures de ces élevages doivent être protégées pour éviter que les animaux ne se blessent lors de leurs déplacements ou de leurs frottements.

Il est en effet fréquent que les animaux se cognent et/ou se grattent sur des structures qui ne sont pas prévues / adaptées à cet effet, avec les risques de lésions cutanées qui en découlent.

### Présentation de l'invention

Afin de remédier à l'inconvénient précité de l'état de la technique, la présente invention propose un accessoire pour un élevage d'animaux, en particulier de bovins, équins ou porcins, destiné à être fixé sur une structure à recouvrir et à protéger.

Plus particulièrement, l'invention concerne un accessoire pour un élevage d'animaux, en particulier de bovins, équins ou porcins, destiné à être fixé sur une structure à recouvrir et à protéger.

L'accessoire selon l'invention comprend une plaque réalisée dans un matériau élastique, avantageusement un matériau élastique élastomère, de préférence obtenue par moulage.

La plaque comporte une face avant et une face arrière, entre lesquelles est rapportée au moins une sous-couche de renfort.

La plaque comporte :
- plusieurs organes saillants, adaptés au brossage des animaux, répartis sur ladite face avant, et
- plusieurs logements, répartis sur la surface de ladite au moins une sous-couche de renfort, adaptés chacun à recevoir un organe de fixation.

Un tel accessoire possède alors les avantages suivants :
- il peut être fixé sur toute structure de l'enceinte d'élevage, par exemple un poteau d'angle, une mangeoire ou une clôture,
- il prévient les blessures par chocs dans les coins de poteaux de structure du bâtiment (IPN, mur béton, etc.),
- il assure une protection de la structure recouverte,
- il permet à l'animal de se gratter efficacement, sans risque de se blesser.

D'autres caractéristiques non limitatives et avantageuses du produit conforme à l'invention, prises individuellement ou selon toutes les combinaisons techniquement possibles, sont les suivantes :
- les organes saillants sont répartis selon un motif régulier, et les logements sont implantés également dans ce motif régulier ;
- des organes saillants périphériques définissent un contour rectangulaire, et les logements sont répartis dans ledit contour rectangulaire ;
- chaque logement est entouré par au moins deux organes saillants ;
- chaque logement comprend un évidement, avantageusement cylindrique, débouchant au niveau de la face avant et s'étendant sur une partie de l'épaisseur d'une couche avant de ladite plaque qui est définie entre ladite face avant et ladite au moins une sous-couche de renfort ;
- les organes saillants sont répartis régulièrement sur l'ensemble de ladite face avant, sur toute la longueur et sur toute la largeur de la face avant (l'accessoire est dépourvu de bandes latérales et/ou transversales, adaptées à recevoir des moyens de solidarisation avec ladite structure) ;
- ledit accessoire comprend les organes de fixation, par exemple une vis/pointe associée à une rondelle ;
- la face arrière de la plaque comporte au moins une rainure longitudinale, avantageusement de forme générale cylindrique ou diédrique ;
- les organes saillants consistent en des plots, avantageusement de forme pyramidale ou conique ;
- les organes saillants présentent les dimensions suivantes : une hauteur (H) de 5 à 30 mm, de préférence de 10 à 20 mm, une largeur d'embase (L3) de 10 à 20 mm ;
- les organes saillants sont réalisés monoblocs ou rapportés, par rapport à la face avant de la plaque ;
- ladite plaque présente un contour rectangulaire ou carré ;
- ladite plaque présente les dimensions suivantes : une longueur de 1 m à 2 m, et une largeur de 15 cm à 50 cm ;
- au moins deux organes saillants sont reliés par une nervure qui est réalisée monobloc par rapport à la face avant de ladite plaque et par rapport aux organes saillants associés ; les nervures s'étendent avantageusement parallèlement les unes par rapport aux autres, de préférence parallèlement à deux bordures latérales ou à deux bordures transversales,
- ledit accessoire est conditionné dans un contenant parallélépipédique allongé ; ladite plaque et lesdits organes de fixation sont rapportés dans ledit contenant, avec ladite plaque enroulée sur elle-même.

La présente invention concerne encore une enceinte d'élevage dont une structure est recouverte d'un accessoire selon l'invention.

De préférence, ledit accessoire est solidarisé avec la structure par la mise en place de moyens de solidarisation (organes de fixation) au niveau des logements.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale, et en perspective, d'un accessoire selon l'invention ;
[Fig. 2] est une vue partielle et agrandie de l'accessoire selon la figure 1 ;
[Fig. 3] est une vue schématique, de côté, de l'accessoire selon les figures 1 et 2;
[Fig. 4] est une vue schématique, partielle et agrandie, de l'accessoire selon la figure 3 selon un plan de coupe passant par l'un des logements ;
[Fig. 5] est une vue schématique, de côté, de deux organes saillants reliés par un tronçon de nervure.

Il est à noter que, sur ces figures, les éléments structurels et/ou fonctionnels communs aux différentes variantes peuvent présenter les mêmes références.

### Accessoire pour l'élevage d'animaux

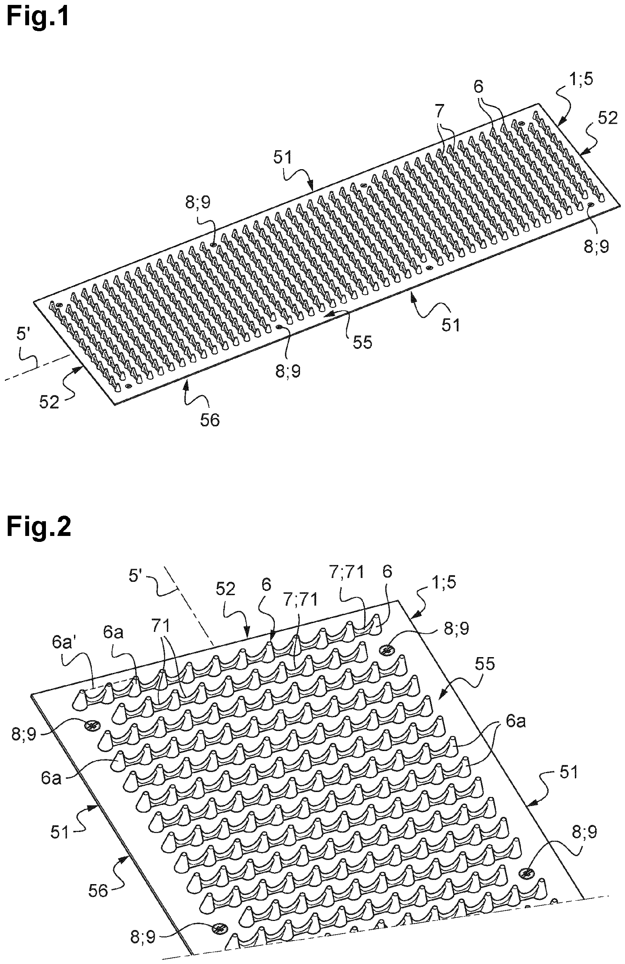

Le présent accessoire 1, tel que illustré sur les figures 1 à 4, consiste en un produit conçu pour l'élevage d'animaux, en particulier de bovins, équins ou porcins.

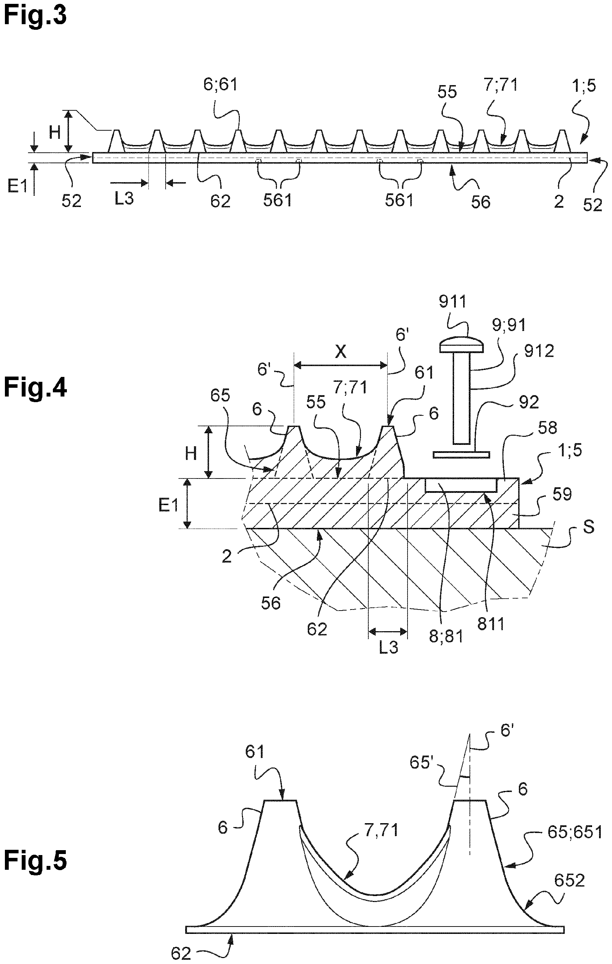

Tel que développé par la suite en relation avec la figure 4, cet accessoire 1 est destiné à être fixé sur une structure S d'un élevage (généralement une structure saillante) à recouvrir et à protéger pour éviter les blessures des animaux.

Pour cela, l'accessoire 1 comprend une plaque 5 réalisée dans un matériau élastique, avantageusement un matériau élastique élastomère.

Par « matériau élastique », on entend en particulier un matériau apte à subir une déformation élastique, avantageusement choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

La plaque 5 est avantageusement réalisée monobloc, soit mono-matériau (dans un seul matériau), soit multi-matériaux (avec au moins deux sous-couches superposées qui sont réalisées dans des matériaux différents).

Une telle plaque 5 est de préférence obtenue par une technique de moulage (avantageusement y compris les organes saillants 6 et les nervures 7 décrites par la suite).

De préférence, la plaque 5, formant l'accessoire 1, présente un contour rectangulaire ou carré.

Cette plaque 5 est délimitée ici par deux bordures latérales 51 (grands côtés), et deux bordures transversales 52 (petits côtés) (figure 1).

Cette plaque 5 comporte encore un axe longitudinal 5', orienté parallèlement aux bordures latérales 51.

Cette plaque 5 présente avantageusement les dimensions suivantes :
- une longueur de 1 m à 2 m (selon une cote mesurée entre les bordures transversales 52), et
- une largeur de 15 cm à 50 cm (selon une cote mesurée entre les bordures latérales 51).

En outre, selon l'invention, la plaque 5 comporte deux faces opposées 55, 56 définissant son épaisseur E1 (figure 4), à savoir :
- une face avant 55, destinée à venir à l'opposé de la structure S et munie d'organes saillants 6 adaptés au brossage des animaux, et
- une face arrière 56, destinée à venir s'appuyer sur une face extérieure de la structure S à protéger.

Par exemple, l'épaisseur E1 est de 10 à 30 mm.

La face avant 55 et la face arrière 56 de la plaque 5 présentent ici une section transversale plane, sur laquelle sont réparties les organes saillants 6. Cette plaque 5 présente ainsi une forme parallélépipédique. Une telle plaque plane 5 est particulièrement adaptée au transport et au stockage à plat, voire enroulée sur elle-même.

De manière alternative, non représentée, la face avant 55 de plaque 5 peut présenter une section transversale courbe convexe, sur tout ou partie de sa largeur, sur laquelle sont réparties les organes saillants 6.

La plaque 5 selon l'invention intègre au moins une sous-couche de renfort 2, rapportée entre la face avant 55 et la face arrière 56, avantageusement parallèlement à ces faces avant 55 et arrière 56.

Ladite au moins une sous-couche de renfort 2 s'étend sur toute la surface de la face avant 55 et la face arrière 56.

Ladite au moins une sous-couche de renfort 2 est choisie parmi les fibres textiles, les fibres de métal ou tout autre produit apportant la stabilité et/ou la résistance à l'élongation.

Cette sous-couche de renfort 2 consiste par exemple en une armature textile servant de renfort, réalisée avantageusement en un matériau choisi parmi le nylon, le coton, le polyester, le polyamide ou tout autre textile de renfort.

Ladite au moins une sous-couche de renfort 2 sépare ici la plaque 5 en deux couches dans son épaisseur (désignées sur la figure 4) :
- une couche avant 58, entre la face avant 55 et la sous-couche de renfort 2, et
- une couche arrière 59, entre la face arrière 56 et la sous-couche de renfort 2. Encore de manière générale, selon l'invention, la plaque 5 comporte :
- les organes saillants 6, adaptés au brossage des animaux, répartis sur sa face avant 55, et
- des logements 8, répartis sur la surface de ladite au moins une sous-couche de renfort 2, adaptés chacun à recevoir un organe de fixation 9 (figure 4).

Les organes saillants 6 consistent avantageusement en des plots (dits encore « tétons » ou « ergots »), également réalisés dans le matériau élastique précité (matériaux élastomères, ou matériaux plastiques ou élastomères thermoplastiques (TPE)).

Ces organes saillants 6 ont une forme qui est adaptée au grattage des animaux tout en prévenant les blessures par frottement, à savoir par exemple une forme pyramidale ou une forme conique.

Ces organes saillants 6 présentent une surface périphérique 65, reliant une extrémité libre 61 et une embase 62.

Cette surface périphérique 65 présente avantageusement une circonférence croissante depuis l'extrémité libre 61 jusqu'à l'embase 62.

La surface périphérique 65 peut être rectiligne sur toute sa hauteur (angle constant par rapport à l'axe longitudinal 6' - figure 4 notamment).

De manière alternative, cette surface périphérique 65 peut être de forme générale concave (angle d'inclinaison 65' qui est croissant par rapport à l'axe longitudinal 6'), de sorte à présenter une forme évasée vers son embase 62 (figure 5).

Une telle forme de réalisation vise à concilier, d'une part, une déformation du côté de l'extrémité libre 61 et, d'autre part, une bonne résistance à l'arrachement du côté de l'embase 62.

Par exemple, la surface périphérique 65 comporte deux portions :
- une portion supérieure 651, du côté de l'extrémité libre 61 (par exemple tronconique) avec un premier angle d'inclinaison (par rapport à l'axe longitudinal 6'), et
- une portion inférieure 652, du côté de l'embase 62 (par exemple courbe), avec un second angle d'inclinaison (par rapport à l'axe longitudinal 6') qui est supérieur audit premier angle d'inclinaison.

Ces organes saillants 6 peuvent être :
- monoblocs par rapport à la face avant 55 de la plaque 5, ou
- rapportés par rapport à la face avant 55 de la plaque 5.

Les organes saillants 6 « monoblocs » sont réalisés avantageusement par moulage, lors de la fabrication de la plaque 5.

Les organes saillants 6 « rapportés » sont avantageusement solidarisés avec la face avant 55 par le biais de moyens de fixation adaptés (non représentés), à savoir par exemple un boulon et un écrou à visser, moulé dans la masse.

Les organes saillants 6 présentent par exemple les dimensions suivantes (figure 4) :
- une hauteur H de 5 à 30 mm, de préférence de 10 à 20 mm, et
- une largeur d'embase L3 de 10 à 20 mm.

La hauteur H correspond à la distance axiale entre la face avant 55 et l'extrémité libre 61 de l'organe saillant 6. La largeur d'embase L3 correspond à une cote (diamètre, côté par exemple) de l'embase 62 de l'organe saillant 6 solidarisé avec la face avant 55.

Chaque organe saillant 6 comporte encore un axe longitudinal 6' (figure 4). La distance linéaire entre deux axes longitudinaux 6' (selon une ligne prise sur la face avant 55) définie un entraxe X.

Et l'entraxe X entre les organes saillants 6 juxtaposés est avantageusement de 15 à 50 mm.

Les organes saillants 6 sont répartis sur la face avant 55, avantageusement régulièrement sur l'ensemble de ladite face avant 55, sur toute la longueur et sur toute la largeur de cette face avant 55.

La face avant 55 est alors dépourvue de bandes latérales et/ou transversales, adaptées à recevoir des moyens de solidarisation (profilés en particulier) avec la structure S.

Ces organes saillants 6 sont avantageusement répartis avec un motif régulier, par exemple en quinconce ou selon des lignes parallèles (figures 1 et 2).

En particulier, certains organes saillants 6 forment des organes saillants périphériques 6a, répartis le long des bordures latérales 51 et transversales 52.

Ces organes saillants périphériques 6a définissent ici un contour rectangulaire 6a' (figure 2).

Les organes saillants 6 (de préférence sur une ligne droite) peuvent être reliés par au moins une nervure 7 qui est réalisée monobloc par rapport à la face avant 55 de la plaque 5 et par rapport aux organes saillants 6 associés.

Ces nervures 7 sont destinées à renforcer les organes saillants 6 à l'encontre des contraintes mécaniques appliquées par les animaux. De telles nervures 7 sont également intéressantes pour éviter une dégradation par morsures, notamment chez les porcins.

Les organes saillants 6 sont ici répartis sur la longueur de chaque nervure 7 (avantageusement rectiligne). Chaque nervure 7 se compose alors de tronçons de nervure 71 qui relient chacun deux organes saillants 6 juxtaposés (figure 2).

Chaque tronçon de nervure 7 forme alors un renfort entre deux organes saillants 6 juxtaposés.

Chaque tronçon de nervure 71 présente ici, sans être limitatif, une bordure libre de forme courbe concave (voir sur les figures 2 et 5 en particulier).

Les nervures 7 s'étendent avantageusement parallèlement les unes par rapport aux autres.

Ces nervures 7 s'étendent en outre avantageusement parallèlement :
- aux deux bordures latérales 51 (grands côtés) (forme de réalisation non représentée), de préférence pour une pose de la plaque 5 avec son axe longitudinal 5' orienté verticalement, ou
- aux deux bordures transversales 52 (petits côtés), de préférence pour une pose de la plaque 5 avec l'axe longitudinal 5' orienté horizontalement.

En pratique, une fois la plaque 5 posée, les nervures 7 sont avantageusement orientées verticalement pour favoriser la chute de matières (poils, terre, etc.) par gravité (et donc éviter une éventuelle accumulation de matière sur ces nervures 7).

Chaque nervure 7 présente avantageusement une hauteur et une largeur qui sont inférieures par rapport aux dimensions des organes saillants 6 associés.

Les logements 8 précités sont avantageusement implantés selon (dans) le motif régulier des organes saillants 6.

En d'autres termes, chaque logement 8 est implanté / situé en lieu et place d'un organe saillant 6 tenant compte du motif régulier.

En l'espèce, les logements 8 sont avantageusement répartis dans (selon) le contour rectangulaire 6a'.

Un logement 8 est ici entouré par au moins deux organes saillants 6, par exemple parmi deux, trois, quatre, cinq organes saillants 6.

Ces organes saillants 6, entourant le logement 8, peuvent être répartis en L (trois organes saillants 6) ou ici en U (cinq organes saillants 6).

De manière générale, un logement 8 (ici borgne) comprend avantageusement un évidement 81, ici cylindrique, destiné à recevoir ici une tête 911 d'une vis / pointe 91 sur une rondelle 92.

Cet évidement 81 débouche au niveau de la face avant 55. Il s'étend sur une partie de la couche avant 58 de la plaque 5, avantageusement sans atteindre la sous-couche de renfort 2 ; le fond 811 de l'évidement 81 s'étend avantageusement à distance de la sous-couche de renfort 2.

L'évidement 81 présente avantageusement les cotes suivantes :
- une profondeur de 5 à 10 mm (distance entre le fond 811 et la face avant 55),
- un diamètre de 20 à 30 mm.

Un logement 8 est avantageusement obtenue par moulage ou par usinage.

Par ailleurs, la face arrière 56 de la plaque 5 peut comporter au moins une rainure longitudinale 561, avantageusement de forme générale cylindrique (voire de manière alternative avec une forme diédrique, dit encore avec une section en Vé).

Une telle rainure longitudinale 561 s'étend sur une partie de l'épaisseur de la couche arrière 59, depuis la face arrière 56, avantageusement sans atteindre la sous-couche de renfort 2.

L'axe longitudinal de ladite au moins une rainure longitudinale 561 s'étend parallèlement aux bordures latérales 51 ou aux bordures transversales 52 (ici sur la figure 3).

Cette rainure longitudinale 561 participe à réduire la résistance à la déformation de la plaque 5, avantageusement lors d'un pliage consistant à rapprocher les bordures latérales 51 ou transversales 52.

Des organes de fixation 9 sont illustrés schématiquement sur la figure 4.

Ces organes de fixation 9 comprennent de préférence une vis ou pointe 91 associée à une rondelle 92.

Une vis / pointe 91 comprend une tête 911 prolongée par une tige 912, avantageusement filetée.

La tête 911 est destinée à venir se loger dans l'encombrement de l'évidement 81 (avantageusement sans faire saillie au niveau de la face avant 55), en appui sur la rondelle 92.

La tige 912 est destinée à traverser la plaque 5 et ladite au moins une sous-couche de renfort 2, de sorte à ressortir au niveau de sa face arrière 56 et s'implanter dans la surface S.

La rondelle 92 est quant à elle destinée à prendre appui dans le fond 811 de l'évidement 81, servant de surface d'appui pour la tête 911 de la vis / pointe 91.

En pratique, de préférence et en vue de sa commercialisation, l'accessoire 1 est conditionné dans un contenant parallélépipédique allongé (non représenté), avantageusement un pavé droit.

Pour cela, la plaque 5 et les organes de fixation 9 sont avantageusement rapportés (glissés) dans ledit contenant, avec ladite plaque 5 enroulée sur elle-même (forme générale en spirale).

### Enceinte d'élevage

La figure 4 représente (très partiellement et schématiquement) une structure S qui est présente avantageusement au sein d'une enceinte d'élevage (non représentée).

Cette structure S est recouverte d'un accessoire 1 tel que décrit ci-dessus en relation avec les figures 1 à 4.

La structure S, généralement une structure saillante, peut consister en toute structure de l'enceinte d'élevage, par exemple un poteau d'angle, une mangeoire ou une clôture.

La plaque 5 est solidarisée avec la structure S par la mise en place des moyens de solidarisation 9 au niveau des logements 8.

Par exemple, ces moyens de solidarisation 9 comprennent notamment les vis / pointes 91 introduites au travers de la plaque 5, traversant la sous-couche de renfort 2 et s'enfonçant dans la structure S.

La plaque 5 est apte à être déformée pour épouser au mieux la structure S, notamment grâce à sa matière et le cas échéant ses rainures longitudinales 561.

En outre, la plaque 5 peut être posée par exemple avec son axe longitudinal 5' orienté horizontalement ou verticalement.

En l'espèce, la plaque 5 est posée avec son axe longitudinal 5' orienté horizontalement.

En pratique, la structure S est alors recouverte et protégée par la plaque 5 de l'accessoire 1, de manière à éviter les blessures cutanées des animaux.

Les animaux peuvent en outre venir se frotter contre la plaque 5, et ainsi se gratter sur les organes saillants 6.

Bien entendu, diverses autres modifications peuvent être apportées à l'invention dans le cadre des revendications annexées.

## Revendications

1. Accessoire pour un élevage d'animaux, en particulier de bovins, équins ou porcins, destiné à être fixé sur une structure à recouvrir et à protéger,
**caractérisé en ce que** ledit accessoire (1) comprend une plaque (5) réalisée dans un matériau élastique,
laquelle plaque (5) comporte une face avant (55) et une face arrière (56), entre lesquelles est rapportée au moins une sous-couche de renfort (2),
laquelle plaque (5) comporte :
- plusieurs organes saillants (6), adaptés au brossage des animaux, répartis sur ladite face avant (55), et
- plusieurs logements (8), répartis sur la surface de ladite au moins une sous-couche de renfort (2), adaptés chacun à recevoir un organe de fixation (9).

2. Accessoire pour un élevage d'animaux, selon la revendication 1, **caractérisé en ce que** les organes saillants (6) sont répartis selon un motif régulier, et **en ce que** les logements (8) sont implantés dans ce motif régulier.

3. Accessoire pour un élevage d'animaux, selon l'une quelconque des revendications 1 ou 2, **caractérisé en ce que**, parmi lesdits organes saillants (6), des organes saillants périphériques (6a) définissent un contour rectangulaire (6a'), et **en ce que** les logements (8) sont répartis dans ledit contour rectangulaire (6a').

4. Accessoire pour un élevage d'animaux, selon l'une quelconque des revendications 1 à 3, **caractérisé en ce que** chaque logement (8) est entouré par au moins deux organes saillants (6).

5. Accessoire pour un élevage d'animaux, selon l'une quelconque des revendications 1 à 4, **caractérisé en ce que** chaque logement (8) comprend un évidement (81), avantageusement cylindrique, débouchant au niveau de la face avant (55) et s'étendant sur une partie de l'épaisseur d'une couche avant (58) de ladite plaque (5) qui est définie entre ladite face avant (55) et ladite au moins une sous-couche de renfort (2).

6. Accessoire pour un élevage d'animaux, selon l'une quelconque des revendications 1 à 5, **caractérisé en ce que** les organes saillants (6) sont répartis régulièrement sur l'ensemble de ladite face avant (55), sur toute la longueur et sur toute la largeur de la face avant (55).

7. Accessoire pour un élevage d'animaux, selon l'une quelconque des revendications 1 à 6, **caractérisé en ce que** ledit accessoire (1) comprend les organes de fixation (9), avantageusement une vis / pointe (91) associée à une rondelle (92).

8. Accessoire pour un élevage d'animaux, selon l'une quelconque des revendications 1 à 7, **caractérisé en ce que** les organes saillants (6) consistent en des plots, avantageusement de forme pyramidale ou conique.

9. Accessoire pour un élevage d'animaux, selon l'une quelconque des revendications 1 à 8, **caractérisé en ce que** les organes saillants (6) sont réalisés monoblocs ou rapportés, par rapport à la face avant (55) de la plaque (5).

10. Accessoire pour un élevage d'animaux, selon l'une quelconque des revendications 1 à 9, **caractérisé en ce qu'**au moins deux organes saillants (6) sont reliés par une nervure (7) qui est réalisée monobloc par rapport à la face avant (55) de ladite plaque (5) et par rapport aux organes saillants (6) associés.

11. Accessoire pour un élevage d'animaux, selon la revendication 10, **caractérisé en ce que** les nervures (7) s'étendent parallèlement les unes par rapport aux autres, de préférence parallèlement à deux bordures latérales (51) ou à deux bordures transversales (52).

12. Accessoire pour un élevage d'animaux, selon l'une quelconque des revendications 1 à 11, **caractérisé en ce que** ledit accessoire (1) est conditionné dans un contenant parallélépipédique allongé,
et **en ce que** ladite plaque (5) et lesdits organes de fixation (9) sont rapportés dans ledit contenant, avec ladite plaque (5) enroulée sur elle-même.

13. Enceinte d'élevage dont une structure (S) est recouverte d'un accessoire (1) selon l'une quelconque des revendications 1 à 11.
